# EUROPÄISCHE PATENTSCHRIFT

(11) **EP 2 324 897 B1**
(45) Veröffentlichungstag und Bekanntmachung des Hinweises auf die Patenterteilung: **02.03.2016**
(21) Anmeldenummer: 10191470.3
(22) Anmeldetag: 17.11.2010
(51) Int. Cl.: B01D 3/00, B01D 19/00, B01D 45/12, B01D 53/18

(54) **Fluideintrittsvorrichtung**
Fluid entry device
Dispositif d'entrée de fluide

(30) Priorität: 24.11.2009 EP 09176896
(43) Veröffentlichungstag der Anmeldung: 25.05.2011
(73) Patentinhaber: Sulzer Chemtech AG, 8404 Winterthur (CH)
(72) Erfinder: Zaitsev, Nikolay, 119361, Moskau (RU); Gäbler, Ansor Dr., 78464 Konstanz (DE)
(74) Vertreter: Manitz, Finsterwald & Partner GbR

(56) Entgegenhaltungen:
- DE-U1- 29 501 148
- US-A1- 2005 189 663
- US-A1- 2009 139 192

## Beschreibung

Die Erfindung betrifft eine Vorrichtung sowie ein Verfahren zum Eintrag und zur Verteilung eines Fluids, insbesondere eines eine Flüssigkeit enthaltenden Gases in einen Behälter gemäss Oberbegriff von Anspruch 1. Der Behälter kann als Stoffaustauschapparat oder Trennapparat ausgebildet sein. Die Erfindung bezieht sich auch auf einen Behälter mit einer derartigen Vorrichtung.

Die einfachste Möglichkeit, ein Fluid in einen Behälter einzutragen ist ein Eintrittsstutzen, der an einer Behälterwand angebracht ist. Das Fluid ist ein Gas, welches eine Flüssigkeit fein verteilt in Tröpfchenform enthält. Die Verteilung des Fluids in dem Behälter kann stromabwärts des Eintrittsstutzens nicht mehr beeinflusst werden. Im Innenraum des Behälters ist das Fluid ungleichmässig verteilt. Eine Fluideintrittsvorrichtung mit verbesserter Verteilung des Fluids ist beispielsweise aus der WO06122940 bekannt. Die Vorrichtung umfasst einen an den Eintrittsstutzen anschliessenden Verteilkanal, der sich im wesentlichen über den gesamten Durchmesser des Behälters erstreckt. Dieser Verteilkanal weist eine Mehrzahl von Leitblechen auf. Jedes der Leitbleche erfasst je einen Teilstrom des ersten Fluids und lenkt das erste Fluid im wesentlichen um 90° um. Hierdurch wird das Fluid auf der linken und rechten Seite des Verteilkanals in den Behälter eingebracht. Gleichzeitig erfolgt eine Abscheidung von Flüssigkeit aus dem aus dem Fluid, welches die Leitbleche als Gas mit einem Anteil an Restflüssigkeit verlässt.

Das Gas durchströmt den Behälter und gelangt zu einer Kontaktfläche, in welcher Gas und Restflüssigkeit aufgrund deren unterschiedlicher Dichte getrennt werden. Die Flüssigkeit wird an der Kontaktfläche abgeschieden, während das Gas die Kontaktfläche durchströmt. Die Kontaktfläche kann beispielsweise als Gestrickabscheider ausgebildet sein.

Die Vorrichtung gemäss WO06122940 stellt eine Verbesserung gegenüber dem Eintrittsstutzen dar, weil das Gas gleichmässiger im Behälter verteilt wird. Allerdings hat sich herausgestellt, dass die Abscheidung der Flüssigkeit unzureichend geschieht und Flüssigkeit in den stromabwärts der Kontaktfläche angeordneten Teil des Behälters mitgerissen wird.

Ausserdem hat sich gezeigt, dass eine Querschnittsfläche des Behälters stromabwärts der Vorrichtung nach WO06122940 jeweils zwei Bereiche aufweist, in denen die Strömungsgeschwindigkeit des Gases grösser ist, als im übrigen Teil der Querschnittsfläche.

Das heisst, die Vorrichtung gemäss WO06122940 stellt zwar eine Verbesserung gegenüber einem gewöhnlichen Eintrittsstutzen an der Behälterwand dar, hat sich aber noch immer als unbefriedigend erwiesen, da nach wie vor eine ungleichmässige Verteilung des Gases im Behälter, eine sogenannte Maldistribution, vorliegt, sowie ein Mitreissen von Flüssigkeit in den stromabwärts befindlichen Teil des Behälters erfolgt.

Die US 2005/189663 offenbart eine Vorrichtung umfassend einen Eintrittskanal und eine Mehrzahl von Verteilkanälen, wobei der mittige Teil des Mantels des Verteilkanals über mindestens eine Öffnung mit dem Eintrittskanal verbunden ist und Austrittsöffnungen zur Verteilung der Flüssigkeit in die Destillationskolonne aufweist.

Aus der US 2009/139192 ist ein Zentrifugalabscheider zum Abtrennen unmischbarer Komponenten aus einem nassen Gasstrom bekannt, welcher eine Lindrischwirbelröhre, ein daran befestigtes raumförmiges Ablenkblech sowie eine Vielzahl von Auslassflügeln aufweist.

Daher ist es Aufgabe der Erfindung, eine Vorrichtung zur Verteilung eines Fluids in einem Behälter vorzusehen, mittels welcher eine verbesserte Trennung des Fluids in ein Gas und eine Flüssigkeit erfolgt, sowie eine gleichmässige Verteilung des Gases im Behälter erzielbar ist.

Diese Aufgabe wird durch eine Vorrichtung zum Eintrag und zur Verteilung eines Fluids in einen Innenraum eines Behälters gelöst. Die Vorrichtung umfasst einen Eintrittskanal und einen Verteilkanal. Der Eintrittskanal mündet in den Verteilkanal, sodass das Fluid vom Eintrittskanal in den Verteilkanal leitbar ist. Der Verteilkanal weist einen Mantel auf, der mindestens eine Austrittsöffnung hat. Der Eintrittskanal ist mit dem Verteilkanal über mindestens eine Öffnung verbunden, welche im Mantel des Verteilkanals angeordnet ist. Die Öffnung ist somit derart angeordnet, dass das Fluid tangential zum Mantel des Verteilkanals in den Verteilkanal eintritt, sodass eine Rotationsströmung im Innenraum des Verteilkanals erzeugbar ist, wobei der Verteilkanal in ein Verteilelement mit einem Mantel übergeht, welches Verteilelement einen kleineren Durchmesser aufweist als der Verteilkanal, so dass zwischen dem Mantel des Verteilkanals und dem Mantel des Verteilelements ein ringförmiger Spalt ausgebildet ist. Vorteilhafterweise ist der Verteilkanal als Rohrelement ausgebildet, wobei das Rohrelement insbesondere einen rotationssymmetrischen, bevorzugt kreisförmigen Querschnitt aufweist. Die Öffnung ist insbesondere in dem als Rohrmantel ausgeführten Mantel des als Rohrelement ausgebildeten Verteilkanals angeordnet, daher strömt das Fluid tangential zu dem Rohrmantel durch die Öffnung.

Das Fluid ist insbesondere ein komprimierbares Fluid, zumeist ein Gas welches eine Flüssigkeit enthält, die im Gas in Tröpfchenform verteilt ist. Das Gas wird somit vom Eintrittskanal herkommend durch die Öffnung in mindestens einen, vorzugsweise in eine Mehrzahl von Verteilkanälen geleitet. Der Verteilkanal schliesst einen Winkel grösser 0° und kleiner als 180° zum Eintrittskanal ein, insbesondere einen Winkel von grösser als 60° und kleiner als 120° zum Eintrittskanal. Nach einem besonders bevorzugten Ausführungsbeispiel beträgt der Winkel zwischen Eintrittskanal und Verteilkanal ungefähr 90°.

Wesentlich ist die unterschiedliche Anordnung der Öffnung im Verteilkanal im Vergleich zum Stand der Technik. Insbesondere kann die Öffnung in der oberen Hälfte und/oder unteren Hälfte des Mantels angeordnet sein. Hierdurch wird der Verteilkanal tangential angeströmt. Dies hat den Vorteil, dass einerseits ein Teilstrom zu einem nachfolgenden Verteilkanal abgezweigt werden kann und andererseits das Fluid tangential durch die Öffnung in den Verteilkanal eintritt. Tangential bedeutet hierbei, dass das Fluid im wesentlichen parallel zur Tangente in dem der Decke oder des Bodens des Eintrittskanals nächstliegenden Punkt des Verteilkanals durch die Öffnung strömt. Befindet sich das Fluid im Verteilkanal, wird das Fluid durch die Innenwand des Verteilkanals umgelenkt. Hierdurch wird das Fluid in Rotation versetzt und die im Gas befindlichen Tröpfchen der Flüssigkeit werden zur Rohrwand beschleunigt und dann an der Innenseite des Mantels abgeschieden und durch ein Flüssigkeitssammelelement abgeleitet. Die Effektivität der Trennung der Flüssigkeit vom Gas ist dabei durch einen intensiveren Kontakt mit Innenwand des Verteilkanals erhöht. Die Flüssigkeit wird somit bereits vor dem Eintritt in den Behälter abgeschieden und abgeführt und gelangt somit nicht in den Hauptstrom des Gases. Nach einem bevorzugten Ausführungsbeispiel ist eine Mehrzahl von Öffnungen insbesondere in der oberen Hälfte des Mantels angeordnet, besonders bevorzugt sind zwei Öffnungen in der oberen Hälfte des Mantels angeordnet.

Die Öffnung kann des weiteren ein Leitelement aufweisen. Das Leitelement ist insbesondere als Lasche ausgebildet, welche aus der Wand des Verteilkanals ausgestanzt wird und anschliessend umgebogen wird. Alternativ oder in Ergänzung hierzu können auch mehrere Leitelemente vorgesehen werden. Das Leitelement kann in das Innere des Verteilkanals ragen, es kann sich aber auch ausserhalb des Verteilkanals in Richtung des Fluideintritts erstrecken. Insbesondere kann das Leitelement an der Kante der Öffnung, welche von der Fluidströmung als erstes erreicht wird in Richtung des Innenraums des Verteilkanals ragen und an der Kante der Öffnung, die von der Fluidströmung zuletzt erfasst wird, stromaufwärts ausgerichtet sein. Hierdurch kann ein Einlaufkanal ausgebildet sein, um dem Fluid eine genauer definierte Strömungsrichtung zu geben, sodass weniger Randwirbel in der Rotationsströmung erzeugt werden, welche sich auf die Abscheidung der Flüssigkeit nachteilig auswirken können. Die Leitelemente können auch separat an das den Verteilkanal bildende Rohrelement angeschweisst werden.

Vorteilhafterweise ist ein Flüssigkeitssammelelement vorgesehen, welches der Eintrittskanal selbst sein kann oder ein an der Wand des Verteilkanals oder des Verteilelements befindliches Kanalstück, welches mit einer Flüssigkeitsaustrittsöffnung in der Wand des Verteilkanals oder Verteilelements verbunden ist. Mittels des Flüssigkeitsleitungselements kann an der Innenwand des Mantels abgeschiedene Flüssigkeit an die Aussenseite des Mantels des Verteilelements oder Verteilkanals weggeleitet werden. Hierzu kann das Flüssigkeitssammelelement zumindest ein Loch enthalten, welches zum Abführen der Flüssigkeit vorgesehen ist.

Ein Vorabscheideelement kann in der Umgebung des Flüssigkeitssammelelements oder stromaufwärts des Flüssigkeitssammelelements angeordnet sein. Mittels des Vorabscheideelements kann die Flüssigkeitsabscheidung weiter verbessert werden. Ist das Vorabscheideelement als eine Hohlräume enthaltende Struktur, wie ein Sieb, Gestrick, Gewebe oder Filz ausgebildet, können Tröpfchen in der Struktur hängen bleiben, dort koaleszieren und in Richtung der Flüssigkeitsaustrittsöffnung geleitet werden. Alternativ dazu kann das Vorabscheideelement als Sperrelement ausgebildet sein, auf welchem das Fluid auftritt und eine Zwangsumlenkung erfährt. Das Sperrelement kann auch einen Drosseleffekt haben. Des weiteren kann das Sperrelement derart angeordnet sein, dass die abgeschiedene Flüssigkeit direkt zu der Flüssigkeitsaustrittsöffnung geleitet wird. Je kleiner die Länge der Öffnung bei gleichbleibender Breite der Öffnung ist, desto ausgeprägter ist die Rotationsströmung, da die Weglänge von der Öffnung bis zur Austrittsöffnung bei einer kürzeren Öffnung zunimmt und die Anzahl der Rotationsvorgänge höher ist, bis das Fluid zur Austrittsöffnung gelangt. Die Öffnung kann insbesondere als Schlitz ausgebildet sein, wobei der Abstand zwischen dem ersten Schlitzende und dem zweiten Schlitzende der Öffnung eine Länge der Öffnung ist. Der Abstand zwischen einer ersten und zweiten Wand der Öffnung ist die Öffnungsbreite. Die erste Wand und die zweite Wand erstrecken sich hierbei zwischen dem ersten und zweiten Schlitzende.

Gemäß der vorliegenden Erfindung ist an den Verteilkanal ein Verteilelement angeschlossen, wobei der Verteilkanal und das Verteilelement über die Austrittsöffnung verbunden sind, sodass das Fluid vom Verteilkanal in das Verteilelement leitbar ist.

Das Verteilelement weist einen Mantel auf, wobei in dem Mantel ein Durchbruch vorgesehen ist, durch welchen das Fluid in den Innenraum des Behälters einleitbar ist. Der Durchbruch ist am Verteilelement derart angeordnet, dass die Strömung des Gases im wesentlichen in Richtung der Längsachse des Behälters erfolgt. Das heisst, dass das von der Flüssigkeit abgetrennte Gas in Richtung der Längsachse des Behälters aus den Durchbrüchen austritt, die insbesondere als schlitzförmige Öffnungen ausgestaltet sein können. Insbesondere kann das Verteilelement als Rohrelement ausgebildet sein.

Der Mantel des Verteilelements weist ein erstes Mantelende und ein zweites Mantelende auf, sodass sich der Mantel zwischen dem ersten und dem zweiten Mantelende erstreckt. Der Mantel kann durch den Eintrittskanal hindurch geführt sein, sodass der Mantel innerhalb des Eintrittselements den Verteilkanal ausbildet. Alternativ dazu kann das Verteilelement durch den Verteilkanal hindurch geführt werden und eine Ausnehmung im Inneren des Verteilkanals enthalten. Alternativ dazu kann das erste Mantelende des Verteilelements an den Verteilkanal anschliessen oder in den Verteilkanal hinein ragen.

Der Durchbruch kann als Schlitz ausgebildet sein, der eine Längsabmessung hat, die sich zwischen dem ersten Ende und dem zweiten Ende des Schlitzes erstreckt. Zwischen dem ersten und zweiten Ende des Schlitzes erstreckt sich eine erste und zweite Wand. Der mittlere Abstand zwischen der ersten und zweiten Wand des Schlitzes ist die Schlitzbreite. Die Längsabmessung mindestens doppelt so gross, vorzugsweise mindestens dreimal so gross, besonders bevorzugt mindestens fünf mal so gross wie die Schlitzbreite, sodass eine möglichst gleichmässige Verteilung des Gases bezogen auf die Querschnittsfläche des Behälters erreicht wird.

Die Öffnungsbreite der Öffnung im Verteilkanal ist vorzugsweise grösser als die Schlitzbreite des Durchbruchs, insbesondere wenn die Längsabmessung des Durchbruchs grösser ist als die Breite der Öffnung oder eine Mehrzahl von Durchbrüchen nebeneinander vorgesehen ist.

Vorteilhafterweise findet die Vorrichtung nach einem der vorhergehenden Ausführungsbeispiele in einem Trennapparat oder einem Stoffaustauschapparat Verwendung.

Ein Verfahren zum Verteilen eines Fluids im Innenraum eines Stoffaustauschapparats mit einer Vorrichtung nach einem der vorhergehenden Ansprüche, wobei das Verfahren folgende Schritte umfasst, das Leiten des Fluids durch den Eintrittskanal in den Verteilkanal und eine Mehrzahl von Verteilelementen, das Umlenken des Fluids vom Verteilkanal in die Verteilelemente, das Austragen des Fluids durch zumindest je eine schlitzförmige Öffnung des Verteilelements in den Innenraum des Stoffaustauschapparats, wobei die schlitzförmige Öffnung derart angeordnet ist, dass die Strömungsrichtung des ersten Fluids im wesentlichen parallel zur Längsachse des Behälters ist.

Nachfolgend wird die Erfindung anhand der Zeichnungen erläutert. Es zeigen:
- Fig. 1: eine Ansicht eines Teils des Behälters sowie der erfindungsgemässen Vorrichtung
- Fig. 2: eine Ansicht des erfindungsgemässen Vorrichtung gem. Fig. 1 von oben
- Fig. 3: eine Ansicht einer erfindungsgemässen Vorrichtung gemäss eines zweiten Ausführungsbeispiels in Richtung des Eintrittskanals
- Fig. 4: eine Ansicht einer erfindungsgemässen Vorrichtung gemäss eines dritten Ausführungsbeispiels in Richtung des Eintrittskanals
- Fig. 5: eine Draufsicht einer erfindungsgemässen Vorrichtung gemäss eines vierten Ausführungsbeispiels
- Fig. 6: eine Seitenansicht einer erfindungsgemässen Vorrichtung gemäss eines fünften Ausführungsbeispiels
- Fig. 7a: einen Schnitt durch die Vorrichtung gemäss Fig. 1
- Fig. 7b: einen Schnitt entlang der Linie A-A der Vorrichtung gemäss Fig. 7a
- Fig. 8a: einen Schnitt durch eine erfindungsgemässe Vorrichtung gemäss eines sechsten Ausführungsbeispiels
- Fig. 8b: einen Schnitt entlang der Linie A-A der Vorrichtung gemäss Fig. 8a

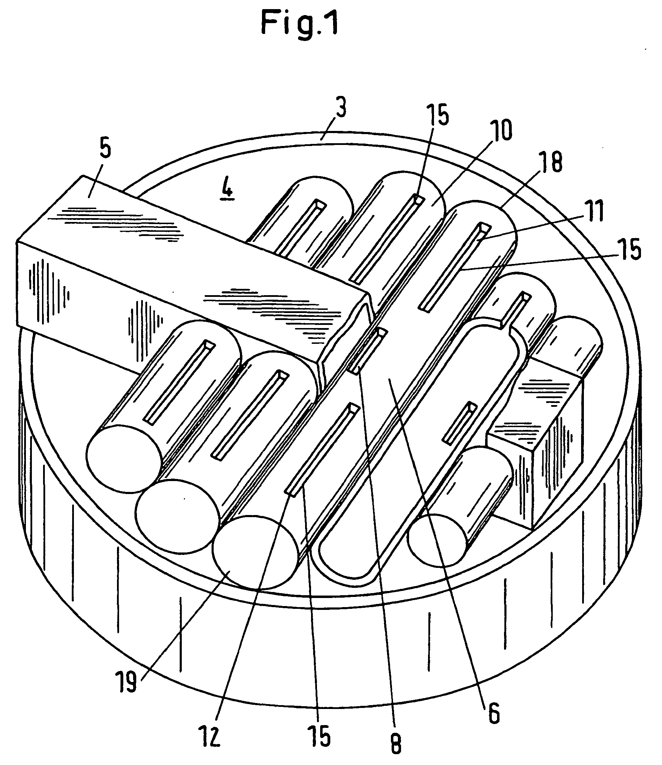

Die Vorrichtung zum Eintrag und zur Verteilung eines Fluids 2 in einen Innenraum 4 eines Behälters 3 nach einem ersten Ausführungsbeispiel der Erfindung gemäss Fig. 1 umfasst einen Eintrittskanal 5 und eine Mehrzahl von Verteilkanälen 6. Der Eintrittskanal 1 ist ausserhalb des Behälters mit einem nicht dargestellten Kanal zur Zufuhr eines Fluids 2 verbunden. Alternativ dazu kann der Kanal sich auch in den Innenraum des Behälters 3 erstrecken. Der Eintrittskanal 5 mündet in den Verteilkanal 6, sodass das Fluid vom Eintrittskanal 5 in den Verteilkanal 6 leitbar ist. Der Verteilkanal 6 weist einen Mantel 10 auf, der mindestens eine Austrittsöffnung 11, 12 hat. Der Eintrittskanal 5 ist mit dem Verteilkanal 6 über mindestens eine Öffnung 8 verbunden, welche im Mantel 10 des Verteilkanals 6 angeordnet ist. Die Verteilkanäle 6 dienen der Verteilung eines Fluids in dem Behälter. Das Fluid gelangt über den Eintrittskanal 5 durch die Öffnungen 8 in die Verteil kanäle 6. Jeder der Verteilkanäle 6 enthält mindestens eine derartige Öffnung 8. Das Fluid ist in der Regel ein Gas, in welchem eine Flüssigkeit in Form von Tröpfchen verteilt ist. Die Öffnung 8 ist derart angeordnet, dass das Fluid tangential zu der Öffnung in den Verteilkanal eintritt, sodass eine Rotationsströmung im Innenraum des Verteilkanals 6 erzeugbar ist. Das Fluid strömt im Inneren des Verteilkanals 6 bis zu den Austrittsöffnungen 11, 12, die in Fig. 1 symmetrisch zu einer Ebene angeordnet sind, welche die Behälterachse und die Längsachse des mittig angeordneten Eintrittskanals 5 enthält. Die Austrittsöffnungen 11, 12 sind als Durchbrüche 15 im Mantel 10 des Verteilkanals 6 ausgebildet.

Der Verteilkanal 6 weist ein Kopfende 18 und ein Fussende 19 auf, welche zumindest teilweise verschlossen sind, sodass das Fluid 2 nur durch die Austrittsöffnungen 11, 12 austreten kann.

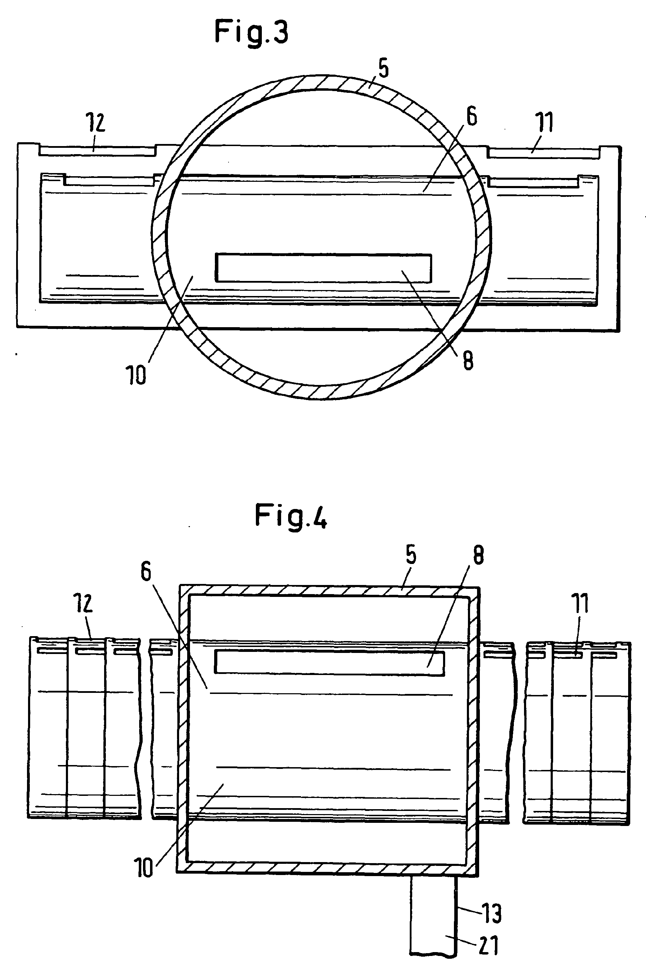

Fig. 1 zeigt eine Mehrzahl von Verteilkanälen 6, die sich parallel zu dem mit Bezugszeichen versehenen Verteilkanal erstrecken. Diese Verteilkanäle 6 weichen voneinander in ihrer Länge ab und können auch unterschiedliche Durchmesser haben, was in Fig. 3 gezeigt ist. Die Anordnung der Verteilkanäle im Behälter ist derart, dass ein möglichst grosser Anteil der Querschnittsfläche des Behälters von Verteilkanälen 6 bedeckt ist.

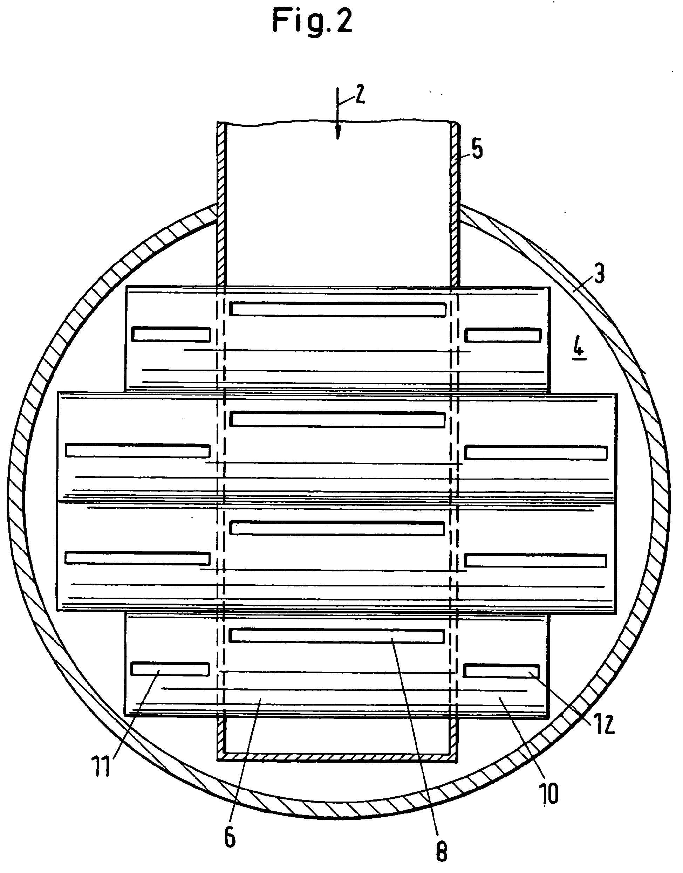

Fig. 2 ist eine Ansicht des erfindungsgemässen Vorrichtung gem. Fig. 1 von oben. Fig. 2 zeigt die Anordnung der Öffnungen 8, die sich in der oberen Hälfte der Verteilkanäle 6 befinden. Der Mantel der Verteilkanäle enthält auch die entsprechenden Austrittsöffnungen 11, 12. Die Verteilkanäle 6 sind gemäss Fig. 2 aneinanderliegend, das heisst, zwischen benachbarten Verteilkanälen ist kein Abstand vorgesehen. Nach einem alternativen Ausführungsbeispiel können auch Abstände zwischen benachbarten Verteilkanälen vorgesehen sein. Fig. 3 zeigt eine Ansicht einer erfindungsgemässen Vorrichtung gemäss eines zweiten Ausführungsbeispiels in Richtung des Eintrittskanals 5. Der Eintrittskanal 5 hat einen zylindrischen Querschnitt. Der Durchmesser des Eintrittskanals 6 ist grösser als der Durchmesser der Verteilkanäle, damit das Fluid in dem Hohlraum oberhalb und unterhalb des Verteilkanals strömen kann. Hierdurch wird sichergestellt, dass das Fluid alle Verteilkanäle erreicht. Das zweite Ausführungsbeispiel unterscheidet sich vom ersten Ausführungsbeispiel nur dahingehend, dass der Durchmesser der Verteilkanäle 6 unterschiedlich ist. Des weiteren ist die Öffnung 8 in der unteren Hälfte des Mantels 10 angeordnet.

Fig. 4 ist eine Ansicht einer erfindungsgemässen Vorrichtung gemäss eines dritten Ausführungsbeispiels in Richtung des Eintrittskanals. Im Unterschied zu Fig. 3 ist der Eintrittskanal 5 kastenförmig. Des weiteren ist die Öffnung 8 des Verteilkanals in der oberen Hälfte des Mantels 10 angeordnet. Es ist auch möglich, Öffnungen 8 oberhalb und unterhalb des Mantels 10 anzuordnen, was zeichnerisch nicht dargestellt ist.

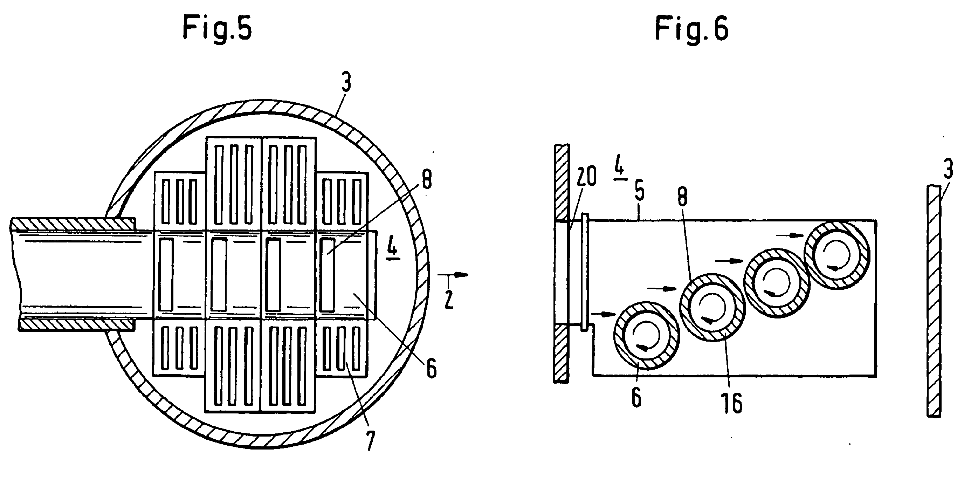

Fig. 5 zeigt eine Draufsicht einer efindungsgemässen Vorrichtung gemäss eines vierten Ausführungsbeispiels. Im Unterschied zu den vorhergehenden Ausführungsbeispielen sind eine Mehrzahl an Austrittsöffnungen 11, 12 auf jeder Seite jedes Verteilkanals 6 angeordnet. Selbstverständlich können die Austrittsöffnungen auch eine andere Anordnung aufweisen, sie können beispielsweise versetzt zueinander angeordnet sein, sie können auch als Löcher ausgebildet sein, sodass die Oberseite des Mantels 10 nach der Art eines Lochblechs ausgebildet ist, was zeichnerisch nicht dargestellt ist. Des weiteren müssen die Austrittsöffnungen auch nicht parallel zueinander angeordnet sein. Auch die Länge und/oder Breite jeder Austrittsöffnung kann variabel sein.

Fig. 6 zeigt eine Seitenansicht einer erfindungsgemässen Vorrichtung gemäss eines fünften Ausführungsbeispiels. In dieser Seitenansicht sind die Verteilkanäle geschnitten dargestellt. Der Eintrittskanal 5 ist nur schematisch dargestellt, er ist im Bereich der Verteilkanäle aufgeschnitten, sodass die Öffnungen 8 der Verteilkanäle 6 sichtbar sind. Die Verteilkanäle 6 sind zueinander versetzt angeordnet, das heisst in unterschiedlicher Höhe. Der Verteilkanal, welcher der Eintrittsöffnung 20 am nächsten liegt, nimmt die tiefstliegende Position ein, jeder anschliessende Verteilkanal 6 nimmt eine höhere Position als der vorhergehende Verteilkanal ein. Diese Anordnung ist vorteilhaft, wenn die Öffnungen 8 in der oberen Hälfte des Mantels 10 angeordnet sind. In diesem Fall wird jede der Öffnungen unbehindert von dem Fluid angeströmt.

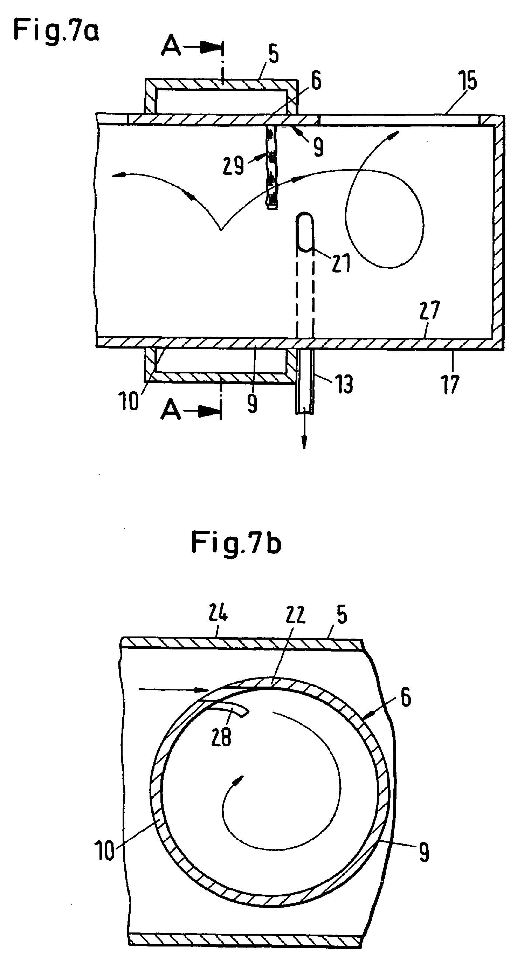

Fig. 7a zeigt einen Schnitt durch die Vorrichtung gemäss Fig. 1. Sowohl der Eintrittskanal 5 als auch einer der Verteilkanäle 6 ist geschnitten dargestellt. Der Schnitt ist derart gelegt, dass die Öffnung 8 vor der Schnittebene liegt, daher ist sie nicht sichtbar. In Fig. 7a ist der Verlauf der Strömung des Fluids 2 dargestellt. Das Fluid 2 gelangt durch die Öffnung 8 in der in Fig. 7b gezeigten Weise und wird von dem Mantel 10 umgelenkt, sodass eine Rotationsströmung entsteht. Die Rotationsströmung weist auch eine axiale Komponente auf, sodass das Fluid ausgehend von der Öffnung 8 in Richtung der Austrittsöffnungen 11, 12 geleitet wird. Ein Teil der Flüssigkeit kann der Rotationsbewegung nicht folgen und setzt sich an der Innenwand 27 des Mantels 10 ab. Die Flüssigkeit strömt entlang der Innenwand bis zu einer Flüssigkeitsaustrittsöffnung 21, die in ein Flüssigkeitssammelelement 13 mündet. Das Flüssigkeitssammelelement kann auch innerhalb des Eintrittskanals 5 angeordnet sein. Das Flüssigkeitssammelelement 13 ist an der Aussenseite 17 des Mantels angeordnet.

Des weiteren kann ein Vorabscheideelement 29 stromaufwärts des Flüssigkeitssammelements 13 angeordnet sein. Dieses Vorabscheideelement kann insbesondere im Verteilkanal 6 angeordnet sein. Nach dem in Fig. 7a dargestellten Ausführungsbeispiel handelt es sich um eine Hohlräume enthaltende Struktur, wie ein Sieb, Gestrick, Gewebe oder eine filzartige Struktur, welche sich über zumindest einen Teil der Querschnittsfläche des Rohrelements 9 erstreckt. Fig. 7b zeigt einen Schnitt entlang der Linie A-A der Vorrichtung gemäss Fig. 7a. Eine Öffnung 8 ist im Schnitt dargestellt. Diese Öffnung befindet sich in der oberen Hälfte des Verteilkanals 6. Die Öffnung ist möglichst nahe an dem der Decke 24 des Eintrittskanals 5 nächstgelegenen Punkt 22 des Verteilkanals 6 angeordnet. Daher entspricht die Strömungsrichtung des Fluids 2 an dieser Stelle im wesentlichen der Richtung der Tangente, die in dieser Darstellung horizontal ist. Aus diesem Grund tritt das Fluid tangential zu der Öffnung 8 in den Verteilkanal 6 ein. Des weiteren kann die Öffnung 8 ein Leitelement 28 aufweisen. Dieses Leitelement 28 ist in Fig. 7b dargestellt. Insbesondere kann das Leitelement 28 als Lasche ausgebildet sein. Das Leitelement 28, wird aus dem Wandteil des Rohrelements 9 gebildet, welcher zur Herstellung der Öffnung 8 aus dem Rohrelement 9 herausgeschnitten oder gestanzt ist. Dementsprechend wird das Wandteil nur an 3 Seiten durchtrennt, sodass eine Lasche gebildet wird. Die Lasche wird um die vierte Seite umgebogen, sodass eine Öffnung 8 erhalten wird.

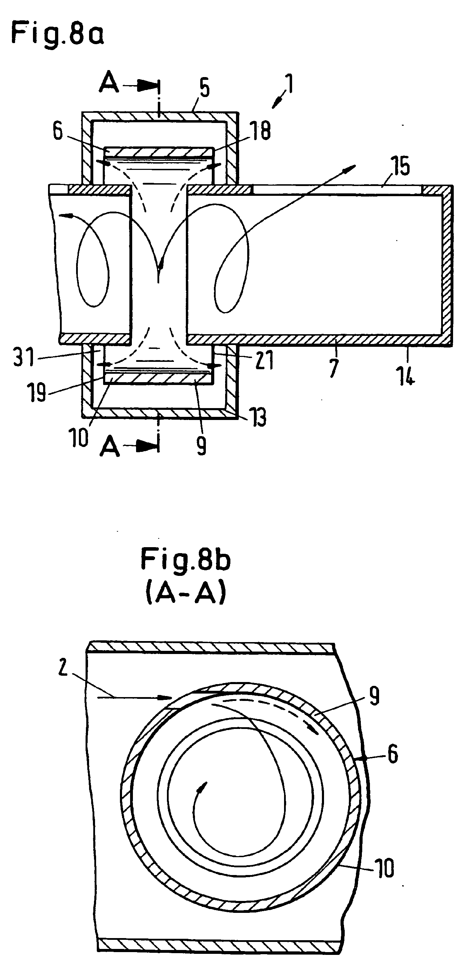

Fig. 8a zeigt einen Schnitt durch eine erfindungsgemässe Vorrichtung gemäss eines sechsten Ausführungsbeispiels. Fig. 8a zeigt einen Verteilkanal 6, welcher innerhalb des Eintrittskanals 5 angeordnet ist. Der Verteilkanal 6 geht in ein Verteilelement 7 über, welches sich zu einem grossen Teil ausserhalb des Eintrittskanals 5 erstreckt. Das Verteilelement 7 hat einen Mantel 14, der zumindest einen Durchbruch 15 enthält.

Der Verteilkanal weist ebenfalls einen Mantel 10 auf, der ein Kopfende 18 und ein Fussende 19 enthält. Das Kopfende 18 enthält in diesem Fall die Asutrittsöffnung 21 und das Fussende 19 die Austrittsöffnung 31. Der Durchmesser des Verteilelements 7 ist dementsprechend kleiner als der Durchmesser des Verteilkanals 6. Hierdurch ergibt sich je eine Austrittsöffnung 21, 31, die als ringförmiger Spalt ausgebildet ist. Es ist auch möglich, dass die Austrittsöffnung 21, 31 an der Seitenwand des Eintrittskanals angeordnet sind, was aber zeichnerisch nicht dargestellt ist.

Ist die Austrittsöffnung 21, 31 innerhalb des Eintrittskanals 5 angeordnet, ergibt sich als zusätzlicher Vorteil, dass zumindest ein Teil der im Gas befindlichen Flüssigkeit, der an der Innenwand des Mantels 10 abgeschieden worden ist, durch diese Austrittsöffnung 21, 31 in den Eintrittskanal zurückgeführt werden kann. Der Eintrittskanal 5 übernimmt somit die Funktion des Flüssigkeitssammelelements.

Fig. 8b zeigt einen Schnitt entlang der Linie A-A der Vorrichtung gemäss Fig. 8a. Der Verlauf der Fluidströmung ist auch in Fig. 8b dargestellt. Die gestrichelte Linie zeigt die Strömung der Flüssigkeit. Hieraus wird deutlich, dass die Flüssigkeit der Rotationsbewegung weniger gut folgen kann als der Gasstrom. Daher wird die Flüssigkeit über den Ringspalt ausgetragen und gelangt auf den Boden 25 des Eintrittskanals 5.

## Patentansprüche

1. Vorrichtung (1) zum Eintrag und zur Verteilung eines Fluids (2) in einen Innenraum (4) eines Behälters (3), umfassend einen Eintrittskanal (5) und einen Verteilkanal (6), wobei der Eintrittskanal (5) in den Verteilkanal (6) mündet, sodass das Fluid vom Eintrittskanal (5) in den Verteilkanal (6) leitbar ist, wobei der Verteilkanal (6) einen Mantel (10) aufweist, der mindestens eine Austrittsöffnung (11, 12) hat, wobei der Eintrittskanal (5) mit dem Verteilkanal (6) über mindestens eine Öffnung (8) verbunden ist, welche im Mantel (10) des Verteilkanals (6) angeordnet ist, wobei die Öffnung (8) derart angeordnet ist, dass das Fluid tangential zum Mantel (10) des Verteilkanals (6) in den Verteilkanal (6) eintritt, sodass eine Rotationsströmung im Innenraum des Verteilkanals (6) erzeugbar ist, **dadurch gekennzeichnet, dass** der Verteilkanal (6) in ein Verteilelement (7) mit einem Mantel (14) übergeht, welches Verteilelement (7) einen kleineren Durchmesser aufweist als der Verteilkanal (6), sodass zwischen dem Mantel (10) des Verteilkanals (6) und dem Mantel (14) des Verteilelements (7) ein ringförmiger Spalt ausgebildet ist.

2. Vorrichtung nach Anspruch 1, wobei der Verteilkanal (6) einen Winkel grösser 0° und kleiner als 180° zum Eintrittskanal (5) einschliesst, insbesondere einen Winkel von grösser als 60° und kleiner als 120° zum Eintrittskanal (5) einschliesst.

3. Vorrichtung nach Anspruch 1, wobei der Verteilkanal (6) als ein Rohrelement (9) ausgebildet ist.

4. Vorrichtung nach einem der vorhergehenden Ansprüche, wobei die Öffnung (8) ein Leitelement (28) aufweist.

5. Vorrichtung nach einem der vorhergehenden Ansprüche, wobei die Öffnung (8) in der oberen Hälfte und/oder unteren Hälfte des Mantels (10) angeordnet ist.

6. Vorrichtung nach einem der vorhergehenden Ansprüche, wobei das Fluid ein Gas und eine Flüssigkeit umfasst, wobei die Flüssigkeit in Tropfenform im Gas verteilt ist, wobei die Flüssigkeit im Mantel (10) zumindest teilweise abscheidbar ist.

7. Vorrichtung nach Anspruch 6 wobei ein Flüssigkeitssammelelement (5, 13) vorgesehen ist.

8. Vorrichtung nach Anspruch 7, wobei ein Vorabscheideelement (29) in der Umgebung oder stromaufwärts des Flüssigkeitssammelelements (5, 13) angeordnet ist.

9. Vorrichtung nach Anspruch 8, wobei in dem Mantel (14) des Verteilelements (7) ein Durchbruch (15) vorgesehen ist, durch welchen das Fluid in den Innenraum (4) des Behälters (3) einleitbar ist.

10. Vorrichtung nach Anspruch 8 oder 9, wobei das Verteilelement (7) ein Flüssigkeitssammelelement (13) aufweist., um an der Innenwand (27) des Mantels (14) abgeschiedene Flüssigkeit an die Aussenseite (17) des Mantels (14) des Verteilelements (7) wegzuleiten.

11. Vorrichtung nach einem der vorhergehenden Ansprüche, wobei in dem Eintrittskanal (5) eine Mehrzahl von Verteilkanälen (6) angeordnet ist.

12. Vorrichtung nach Anspruch 11, wobei zumindest ein erster und ein zweiter Verteilkanal (6, 16) vorgesehen sind, wobei der erste Verteilkanal (6) in unterschiedlicher Höhe zur Eintrittsöffnung angeordnet ist wie der zweite Verteilkanal (16).

13. Trennapparat, umfassend eine Vorrichtung nach einem der vorhergehenden Ansprüche.

14. Stoffaustauschapparat umfassend eine Vorrichtung nach einem der Ansprüche 1 bis 13.

## Claims

1. An apparatus (1) for the introduction and for the distribution of a fluid (2) into an inner space (4) of a container (3), comprising an inlet passage (5) and a distribution passage (6), wherein the inlet passage (5) opens into the distribution passage (6) so that the fluid can be guided from the inlet passage (5) into the distribution passage (6), wherein the distribution passage (6) has a jacket (10) which has at least one outlet opening (11, 12), wherein the inlet passage (5) is in communication with the distribution passage (6) via at least one opening (8) which is arranged in the jacket (10) of the distribution passage (6), wherein the opening (8) is arranged such that the fluid enters into the distribution passage (6) tangentially to the jacket (10) of the distribution passage (6) so that a rotary flow can be generated in the inner space of the distribution passage (6), **characterized in that** the distribution passage (6) merges into a distribution element (7) having a jacket (14), which distribution element (7) has a smaller diameter than the distribution passage (6) so that an annular gap is formed between the jacket (10) of the distribution passage (6) and the jacket (14) of the distribution element (7) .

2. An apparatus in accordance with claim 1, wherein the distribution passage (6) includes an angle greater than 0° and less than 180° to the inlet passage (5), in particular an angle greater than 60° and less than 120° to the inlet passage (5).

3. An apparatus in accordance with claim 1 wherein the distribution passage (6) is made as a tube element (9).

4. An apparatus in accordance with any one of the preceding claims, wherein the opening (8) has a guide element (28).

5. An apparatus in accordance with any one of the preceding claims, wherein the opening (8) is arranged in the upper half and/or in the lower half of the jacket (10).

6. An apparatus in accordance with any one of the preceding claims, wherein the fluid comprises a gas and a liquid, wherein the liquid is distributed in the gas in drop form and wherein the liquid can be at least partly separated in the jacket (10).

7. An apparatus in accordance with claim 6, wherein a liquid collection element (5, 13) is provided.

8. An apparatus in accordance with claim 7, wherein a preseparation element (29) is arranged in the environment of or upstream of the liquid collection element (5, 13).

9. An apparatus in accordance with claim 8, wherein a breakthrough (15) is provided in the jacket (14) of the distribution element (7) through which the fluid can be guided into the inner space (4) of the container (3).

10. An apparatus in accordance with claim 8 or claim 9, wherein the distribution element (7) has a liquid collection element (13) to guide liquid separated at the inner wall (27) of the jacket (14) away to the outside (17) of the jacket (14) of the distribution element (7).

11. An apparatus in accordance with any one of the preceding claims, wherein a plurality of distribution passages (6) are arranged in the inlet passage (5).

12. An apparatus in accordance with claim 11, wherein at least one first and one second distribution passage (6, 16) are provided and wherein the first distribution passage (6) is arranged at a different level to the inlet opening than the second distribution passage (16).

13. A separation device comprising an apparatus in accordance with any one of the preceding claims.

14. A mass transfer device comprising an apparatus in accordance with any one of the claims 1 to 13.

## Revendications

1. Dispositif (1) pour l'introduction et pour la répartition d'un fluide (2) dans un espace intérieur (4) d'un récipient (3), comprenant un canal d'entrée (5) et un canal de répartition (6), dans lequel le canal d'entrée (5) débouche dans le canal de répartition (6), de sorte que le fluide peut être conduit depuis le canal d'entrée (5) jusque dans le canal de répartition (6), dans lequel le canal de répartition (6) comprend une enveloppe (10) qui présente au moins une ouverture de sortie (11, 12), dans lequel le canal d'entrée (5) est relié au canal de répartition (6) via au moins une ouverture (8) qui est agencée dans l'enveloppe (10) du canal de répartition (6), dans lequel l'ouverture (8) est agencée de telle façon que le fluide pénètre dans le canal de répartition (6) tangentiellement par rapport à l'enveloppe (10) du canal de répartition (6), de sorte qu'il est possible d'engendrer un écoulement en rotation dans l'espace intérieur du canal de répartition (6),
**caractérisé en ce que** le canal de répartition (6) se transforme dans un élément de répartition (7) avec une enveloppe (14), ledit élément de répartition (7) ayant un diamètre plus petit que le canal de répartition (6), de sorte qu'un intervalle de forme annulaire est réalisé entre l'enveloppe (10) du canal de répartition (6) et l'enveloppe (14) de l'élément de répartition (7).

2. Dispositif selon la revendication 1, dans lequel le canal de répartition (6) enferme un angle plus grand que 0° et plus petit que 180° par rapport au canal d'entrée (5), en particulier un angle plus grand que 60° et plus petit que 120° par rapport au canal d'entrée (5).

3. Dispositif selon la revendication 1, dans lequel le canal de répartition (6) est réalisé comme un élément tubulaire (9).

4. Dispositif selon l'une des revendications précédentes, dans lequel l'ouverture (8) comporte un élément de guidage (28).

5. Dispositif selon l'une des revendications précédentes, dans lequel l'ouverture (8) est agencée dans la moitié supérieure et/ou dans la moitié inférieure de l'enveloppe (10).

6. Dispositif selon l'une des revendications précédentes, dans lequel le fluide inclut un gaz et un liquide, tels que le liquide est réparti dans le gaz sous forme de gouttes, et le liquide est susceptible de se déposer au moins partiellement dans l'enveloppe (10).

7. Dispositif selon la revendication 6, dans lequel il est prévu un élément collecteur de liquide (5, 13).

8. Dispositif selon la revendication 7, dans lequel un élément séparateur préalable (29) est agencé dans l'environnement ou en amont de l'élément collecteur de liquide (5, 13).

9. Dispositif selon la revendication 8, dans lequel il est prévu une traversée (15) dans l'enveloppe (14), traversée à travers laquelle le fluide peut être introduit dans l'espace intérieur (4) du récipient (3).

10. Dispositif selon la revendication 8 ou 9, dans lequel l'élément de répartition (7) comprend un élément collecteur de liquide (13) afin de guider le liquide déposé sur la paroi intérieure (27) de l'enveloppe (14) en éloignement vers la face extérieure (17) de l'enveloppe (14) de l'élément de répartition (7).

11. Dispositif selon l'une des revendications précédentes, dans lequel une pluralité de canaux de répartition (6) sont agencés dans le canal d'entrée (5).

12. Dispositif selon la revendication 11, dans lequel il est prévu au moins un premier et un second canaux de répartition (6, 16), tels que le premier canal de répartition (6) est agencé par rapport à l'ouverture d'entrée à une hauteur différente de celle du second canal de répartition (16).

13. Appareil séparateur, comprenant un dispositif selon l'une des revendications précédentes.

14. Appareil d'échange de matières comprenant un dispositif selon l'une des revendications 1 à 13.
